# EUROPEAN PATENT APPLICATION

(11) **EP 0 916 441 A1**
(43) Date of publication of application: **19.05.1999**
(21) Application number: 97309178.8
(22) Date of filing: 14.11.1997
(51) Int. Cl.: B23K 26/04, H01S 3/00, G02B 7/28

(54) **Focus detection system and method**

(71) Applicant: Fujifilm Electronic Imaging Limited, London NW3 6HY (GB)
(72) Inventor: Hicks, Michael Ernest, Tring, Herts, HP23 6BP (GB)
(74) Representative: Skone James, Robert Edmund

(57) **Abstract**

A method of focusing a beam of coherent radiation from a source (1). The method comprises passing the beam through a focusing system (9) onto a surface; adjusting the focusing system (9); and monitoring the performance of the source (1).

## Description

The invention relates to a method of focusing a beam of coherent radiation from a source and a radiation beam focus detection system.

There are many applications in which it is necessary to focus a radiation beam automatically and a typical example includes an image exposure system in which a modulated laser beam is used to expose a record medium so as to generate colour separations and the like. One method which has been known for some time and which is particularly characteristic of laser sources is to take advantage of a fact that as a coherent beam becomes fully focused onto a surface, a speckle pattern is generated. This is believed to be due to the fact that any surface is not entirely flat, particularly at resolutions achieved by a focused coherent beam, with the result that interference effects occur so that the beam is not simply reflected under the laws of reflection but a diffuse reflection occurs leading to the speckle pattern. Using this known method, the image of the beam on a surface is viewed and as focus is approached, a granular pattern appears. The better the focus, the larger the pattern appears to be. The drawback of this approach is that it requires manual observation or additional equipment to monitor the pattern.

In accordance with a first aspect of the present invention, a method of focusing a beam of coherent radiation from a source comprises passing the beam through a focusing system onto a surface; adjusting the focusing system; and monitoring the performance of the source.

In accordance with a second aspect of the present invention, a radiation beam focus detection system comprises a source of a coherent radiation beam; a focusing system through which the beam passes to impinge on a surface; and a monitoring system for monitoring the performance of the source as the focusing system is adjusted.

We have realised that the speckle pattern effect which occurs when the beam is focused onto the surface is partially fed back through the focusing system to the source with the result that the performance of the source itself is affected. Normally, sources are protected from the effects of external light but in the present case this effect is explicitly monitored.

The invention is particularly suited for use with a radiation source in the form of a laser cavity in which the radiation beam exits from one end of the cavity and an auxiliary beam, equivalent to the radiation beam, is emitted from the other end, the monitoring step comprising monitoring the beam emitted from the other end. Such monitoring is relatively straightforward since many conventional laser sources such as laser diodes include an in-built detector such as a photo diode for detecting the rear exiting beam. Thus, no additional equipment is necessary.

Conveniently, the monitoring step comprises comparing the performance of the source with its expected performance. For example, a signal representing the performance of a source, typically obtained from monitoring radiation emitted from the rear of the source as described above, is compared with a signal supplied to the source to drive it. The two signals may be combined and the resultant combined signal monitored, for example by viewing on an oscilloscope. It has been found that as focus is approached, a low amplitude variation is seen superimposed on the drive signal. This superimposed signal can then be separated from the drive signal using a bandpass filter or the like and then the amplitude of the superimposed signal could be detected and compared with a predetermined threshold, focus being indicated if the amplitude exceeds the threshold.

As an alternative to monitoring the amplitude of the variation, the frequency of the variation could be monitored.

In the preferred method, the source generates a pulsed beam.

Typically, the radiation beam will comprise wavelengths in the visible or near visible region (such as infrared or ultraviolet) but wavelengths outside this range could also be used.

An example of a method and apparatus according to the invention will now be described with reference to the accompanying drawings, in which:-
Figure 1 is a schematic, block diagram of the apparatus;
Figure 2 illustrates the difference between a signal representing the intensity of a back emitted beam from the laser shown in Figure 1 and the laser control signal when there are no downstream optics;
Figure 3 is a view similar to Figure 2 in which simple optics are provided but the laser is not focused onto a substrate; and,
Figure 4 is a view similar to Figure 3 but on an enlarged scale in which the laser beam is focused onto a substrate.

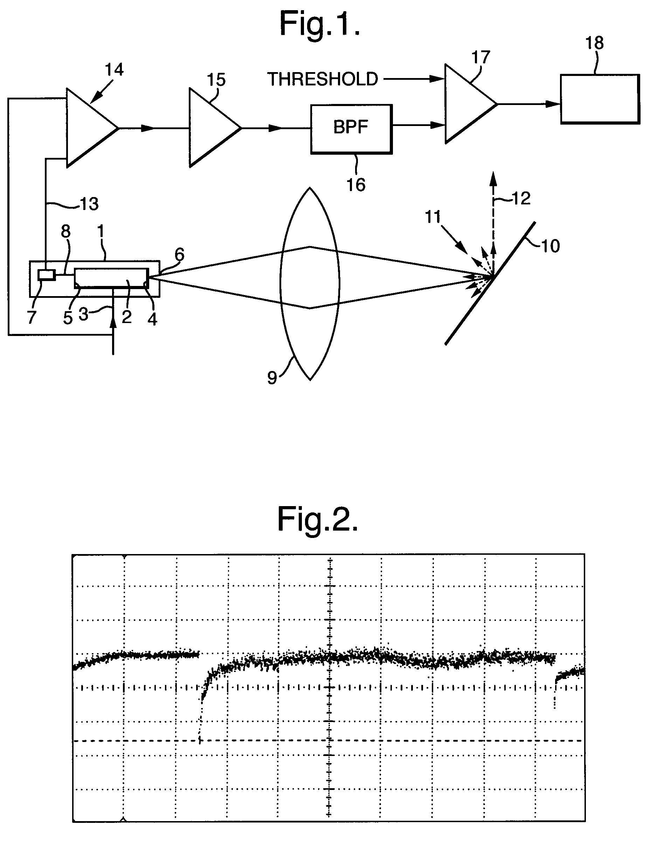

The apparatus shown in Figure 1 comprises a laser diode 1 which, as shown schematically in Figure 1, includes a cavity 2 powered on a line 3 from a source (not shown). Opposite ends 4,5 of the cavity 2 are partially mirrored in a conventional manner and the resultant laser beam exits from the diode 1 through an aperture 6. In order to monitor the performance of the laser diode, a photodiode 7 is included within the laser diode 1, the photodiode receiving a back emitted beam 8 having similar characteristics to the beam 6.

The beam 6 is passed through various optical components (not shown) to a focusing system shown schematically at 9 and then impinges on a surface 10, such as a record medium, at an angle to the normal.

If the beam 6 is accurately focused by the system 9 onto the surface 10, the granular nature of the surface 10 will cause the beam to be scattered through a wide range of angles, as seen at 11. This should be contrasted with the situation where the beam is not well focused when the beam will be simply reflected by the surface 10 under the normal laws of reflection as shown by an arrow 12.

Some of the scattered light 11 will pass back through the focusing system 9 to the laser diode 1 where it will be received in the cavity 2 and cause a variation in performance of the laser diode 1. This variation will affect the form of the rear exiting beam 8 detected by the photodiode 7. The photodiode 7 generates an output signal on a line 13 representing the intensity of the received beam 8 and this is fed to a comparison system 14 along with the original drive signal to the laser diode 1. If the beam is not focused, these two signals will be substantially the same but as focus is approached, the signal on the line 13 will begin to vary significantly from the drive signal.

In one approach, shown in Figure 1, the comparison system 14 can remove the drive signal from the signal on the line 13 so that the difference between the two signals can be monitored. The difference between the two signals will have a relatively high frequency and is amplified by an amplifier 15 and then fed to a bandpass filter 16. The filtered output is then fed to a comparator 17 to the other input of which is fed a threshold signal. When the amplitude of the filtered signal exceeds the threshold, this indicates that focus has been achieved and a suitable output signal is supplied by the comparator 17 to a device 18 such as a display, for example an oscilloscope. This signal could also be used as a feedback control for adjusting the focusing system 9 so that the focusing system 9 is set at the best focal position, corresponding to the largest difference between the filtered signal and the threshold.

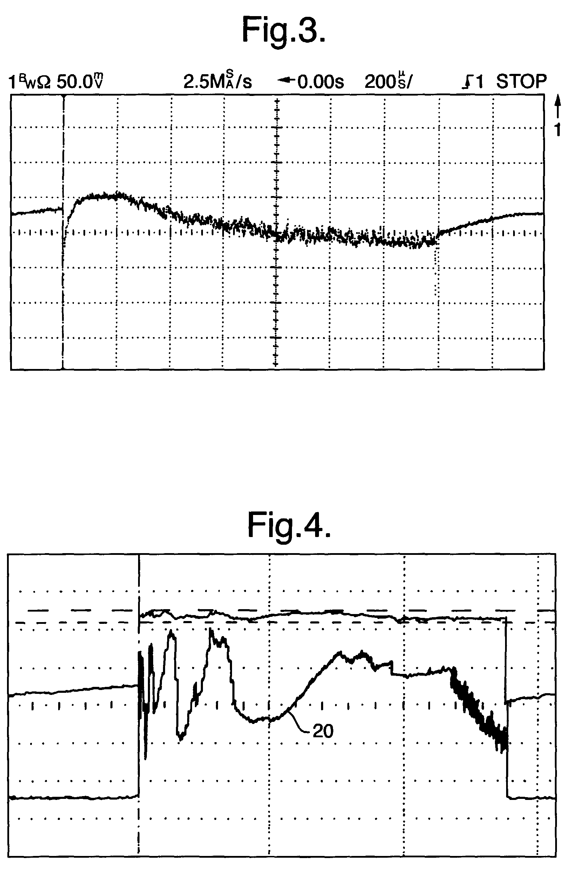

Figures 2 to 4 illustrate the signal output from the comparison system 14 under different conditions. In Figure 2, there are no focusing optics and thus no reflected light and it will be seen that a high frequency signal is generated having a fairly constant form. When a focusing system is used as shown in Figure 1 but the beam is not focused, the output from the comparison system 14 will be similar to that shown in Figure 3 in which a low frequency variation is imparted on the difference signal.

If, however, the laser beam is focused onto the substrate 10, a high frequency difference signal 20 will be produced (Figure 4) with an amplitude significantly greater than that of the signal when there is no focus as shown in Figure 3.

## Claims

1. A method of focusing a beam of coherent radiation from a source, the method comprising passing the beam through a focusing system onto a surface; adjusting the focusing system; and monitoring the performance of the source.

2. A method according to claim 1, wherein the source generates an auxiliary beam corresponding to the coherent radiation beam, the monitoring system monitoring the performance of the auxiliary beam.

3. A method according to claim 1 or claim 2, wherein the monitoring step comprises comparing the performance of the source with its expected performance.

4. A method according to claim 3, wherein a signal representing the performance of the source is compared with the signal supplied to the source to drive it.

5. A method according to claim 4, when dependent on claim 2, wherein the signal representing the performance of the source is obtained by monitoring the auxiliary beam.

6. A method according to claim 5, further comprising generating a signal representing the difference between the auxiliary beam signal and the drive signal, and comparing the difference with a threshold.

7. A method according to any of the preceding claims, wherein the source comprises a laser cavity.

8. A method according to any of the preceding claims, wherein the source generates a pulsed beam.

9. A radiation beam focus detection system comprising a source of a coherent radiation beam; a focusing system through which the beam passes to impinge on a surface; and a monitoring system for monitoring the performance of the source as the focusing system is adjusted.

10. A system according to claim 9, wherein the source comprises a laser cavity.

11. A system according to claim 10, wherein the radiation beam exits from one end of the cavity and an auxiliary beam equivalent to the radiation beam is emitted from the other end, the monitoring system monitoring the beam emitted from the other end.

12. A system according to claim 11, wherein the monitoring system includes a photodiode.

13. A system according to any of claims 9 to 12, wherein the monitoring system carries out a method according to any of claims 1 to 8.
